# EUROPEAN PATENT SPECIFICATION

(11) **EP 3 156 842 B1**
(45) Date of publication and mention of the grant of the patent: **13.06.2018**
(21) Application number: 16156431.5
(22) Date of filing: 19.02.2016
(51) Int. Cl.: G02F 1/1347

(54) **DISPLAY DEVICE**
ANZEIGEVORRICHTUNG
DISPOSITIF D'AFFICHAGE

(30) Priority: 15.10.2015 KR 20150143977
(43) Date of publication of application: 19.04.2017
(73) Proprietor: LG Electronics Inc., Seoul 07336 (KR)
(72) Inventor: PARK, Sangtae, 06772 Seoul (KR); HUR, Hoon, 06772 Seoul (KR); MOON, Sunghyun, 06772 Seoul (KR); HONG, Daewoon, 06772 Seoul (KR)
(74) Representative: Frenkel, Matthias Alexander

(56) References cited:
- WO-A1-2014/149036
- US-A- 5 296 952
- US-A1- 2008 252 832

## Description

This application claims the benefit of Korean Patent Application No. 10-2015-0143977 filed on 15 Oct., 2015.

### BACKGROUND

### Field of the Disclosure

The present disclosure relates to a display device.

### Discussion of the Related Art

With the development of the information society, various demands for display devices have been increasing. Various display devices, such as liquid crystal displays (LCDs), plasma display panels (PDPs), electroluminescent displays (ELDs), and vacuum fluorescent displays (VFDs), have been developed and used to meet various demands for the display devices.

Among the display devices, a liquid crystal display panel of the liquid crystal display includes a liquid crystal layer, and a thin film transistor (TFT) substrate and a color filter substrate which are positioned opposite each other with the liquid crystal layer interposed therebetween. The liquid crystal display panel displays an image using light provided by a backlight unit of the liquid crystal display.

WO 2014/149036 A1 relates to a dual-sided display including an inner layer and a set of outer layers. The inner layer includes an inner array of one or more pixels, each being switchable between a transparent state and an opaque state.

### SUMMARY

It is an object of the present invention to provide a display device that can be manufactured easier. This object is solved by the present invention as defined in independent claim 1. Preferred embodiments are defined by the dependent claims.

In one aspect, there is a display device including a display panel, a shielding film positioned at at least a portion of a back surface of the display panel, the shielding film including a plurality of areas, of which transparencies are independently controlled, and a back cover positioned at a back surface of the shielding film.

The shielding film may include a first state and a second state, in which in the first state, at least a portion of the shielding film is transparent, and in the second state, the at least a portion of the shielding film is opaque.

The shielding film may include first and second films forming one surface and another surface of the shielding film, respectively, first and second conductive layers
positioned between the first and second films, respectively, and a discoloration layer positioned between the first and second conductive layers.

At least one of the first and second conductive layers may be partitioned into the plurality of areas.

The plurality of areas may be formed by at least one non-conductive partition portion.

The first conductive layer may be partitioned into a plurality of areas by at least one first partition portion, and the second conductive layer may be partitioned into a plurality of areas by at least one second partition portion. The first and second partition portions may be formed in different directions from each other.

The first and second partition portions may cross each other at a substantially right angle.

The first and second partition portions may be disposed in a form of a lattice in a thickness direction of the shielding film.

When an electric current is applied to at least two areas of the plurality of areas, a transparency of an overlap area between the first and second conductive layers may be changed.

One of the first and second conductive layers may be connected to a driving electrode to which a control signal is applied, and the other conductive layer may be connected to a common electrode.

A number of areas in the plurality of areas may be equal or more than a number of partitioned first conductive layers and a number of partitioned second conductive layers.

At least one area of the plurality of areas may be transparent at a predetermined time point, and at least another area of the plurality of areas may be opaque at the predetermined time point.

The display device may further include first and second electrodes connected to the first and second conductive layers. The first and second electrodes may form a path along at least one edge of the shielding film.

The discoloration layer may include a plurality of liquid crystal elements, and a plurality of spacers separately disposed from each other inside the discoloration layer and supports the discoloration layer in a thickness direction.

The discoloration layer may be changed from a transparent state to an opaque state in response to a control signal applied to at least one of the first and second conductive layers.

The display device may further include a controller configured to apply a control signal, so that the shielding film is in one state of a first state and a second state, in which, in the first state, at least a portion of the shielding film is transparent, and in the second state, the at least a portion of the shielding film is opaque.

At least a portion of the display panel may be formed of a transparent material. At least a portion of the cover may be formed of a transparent material.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIGS. 1, 2 and 3(a)-3(b) illustrate configuration of a display device according to an exemplary embodiment of the invention;
FIGS. 4, 5, 6(a), 6(b), 7(a), 7(b), 8(a), 8(b), 9(a), 9(b), 10(a), 10(b), 10(c), 11(a), 11(b), 12(a), and 12(b) illustrate an operation of a display device according to various exemplary embodiments of the invention;
FIGS. 13, 14, 15(a), 15(b), 16, 17, 18(a), 18(b), 19(a), 19(b), 20(a), 20(b), 20(c), 21(a), 21(b), 22, 23(a), 23(b), 24(a), 24(b), and 24(c) illustrate configuration of a display device according to various exemplary embodiments of the invention;
FIGS. 25 and 26 illustrate various methods for manufacturing a display device according to an exemplary embodiment of the invention; and
FIG. 27 illustrates a connection structure of a display device according to an exemplary embodiment of the invention.

### DETAINED DESCRIPTION OF THE EMBODIMENT

Reference will now be made in detail to embodiments of the invention, examples of which are illustrated in the accompanying drawings. Wherever possible, the same reference numbers may be used throughout the drawings to refer to the same or like parts. A suffix such as "module" and "unit"" may be assigned or used interchangeably to refer to elements or components. Use of such a suffix herein is merely intended to facilitate the description of the embodiments of the invention, and the suffix itself is not intended to give any special meaning or function. It should be noted that detailed description of known arts may be omitted if it is determined that the detailed description of the known arts may obscure the embodiments of the invention. The accompanying drawings are merely intended to easily describe the embodiments of the invention, and the technical scope of the present invention is not limited by the accompanying drawings. It should be understood that the present invention is not limited to specific disclosed embodiments, but includes all modifications, equivalents and substitutes included within the technical scope of the present invention as defined in the appended claims.

Hereinafter, the embodiments of the invention will be described using a liquid crystal display panel as an example of a display panel. Other display panels may be used. For example, a plasma display panel (PDP), a field emission display (FED) panel, and an organic light emitting diode (OLED) display panel may be used.

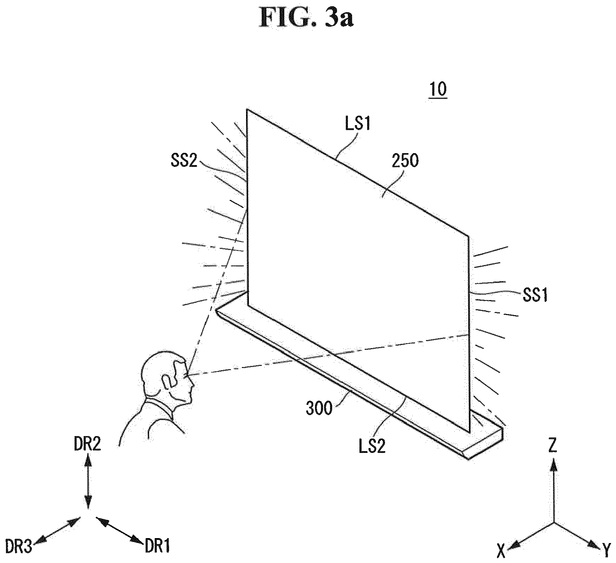

In what follows, a display panel may include a first long side LS1, a second long side LS2 opposite the first long side LS1, a first short side SS1 adjacent to the first long side LS1 and the second long side LS2, and a second short side SS2 opposite the first short side SS1. See, for example, FIG. 3(a).

In the embodiment disclosed herein, the first short side SS1 may be referred to as a first side area; the second short side SS2 may be referred to as a second side area opposite the first side area; the first long side LS1 may be referred to as a third side area which is adjacent to the first side area and the second side area and is positioned between the first side area and the second side area; and the second long side LS2 may be referred to as a fourth side area which is adjacent to the first side area and the second side area, is positioned between the first side area and the second side area, and is opposite to the third side area.

The embodiment of the invention describes that lengths of the first and second long sides LS1 and LS2 are longer than lengths of the first and second short sides SS1 and SS2 for the sake of brevity and ease of reading. However, the lengths of the first and second long sides LS1 and LS2 may be almost equal to the lengths of the first and second short sides SS1 and SS2.

In the following description, a first direction DR1 may be a direction parallel to the long sides LS1 and LS2 of the display panel, and a second direction DR2 may be a direction parallel to the short sides SS1 and SS2 of the display panel.

Further, a third direction DR3 may be a direction orthogonal to the first direction DR1 and/or the second direction DR2. See, for example, FIG. 3(a).

In the embodiment disclosed herein, the first direction DR1 and the second direction DR2 may be commonly referred to as a horizontal direction and a vertical direction, respectively.

Further, the third direction DR3 may be referred to as an orthogonal direction.

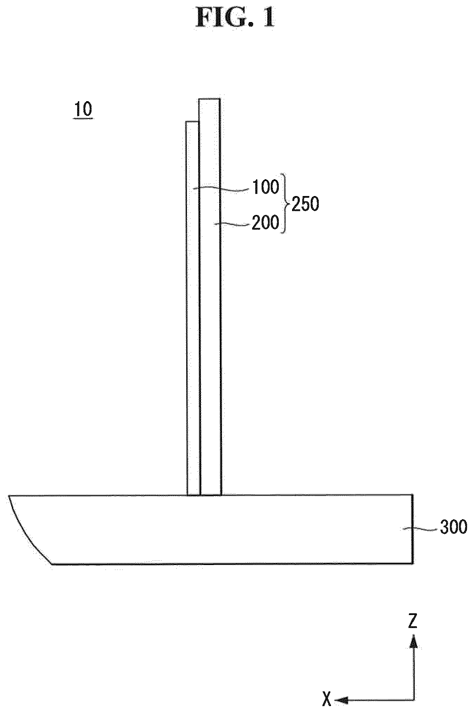

FIGS. 1, 2, 3(a) 3(b) illustrate configuration of a display device according to an exemplary embodiment of the invention.

Referring to FIG. 1, a display device 10 according to the embodiment of the invention may include a display unit 250 and a housing 300.

The display unit 250 may include a display panel 100 and a back cover 200. The display panel 100 may be positioned in front of the back cover 200 and may display an image. The display panel 100 may divide the image into a plurality of pixels and may output the image while controlling color, brightness, and chroma of each pixel.

The display panel 100 may have a rectangular shape. Other shapes may be used for the display panel 100. For example, the display panel 100 may have a shape, in which an edge has a predetermined curvature. The display panel 100 may be an OLED display panel. Other display panels may be used. For example, a liquid crystal display panel may be used for the display panel 100.

The back cover 200 may be positioned on a back surface of the display panel 100. The back cover 200 may be directly attached to the display panel 100. However, the embodiment of the invention is not limited thereto. Another component may be positioned between the display panel 100 and the back cover 200. The size of the back cover 200 may be equal to or larger than the size of the display panel 100.

The back cover 200 may support the back surface of the display panel 100. Hence, the back cover 200 may include a lightweight material having high rigidity.

The housing 300 may be positioned under the display unit 250. The housing 300 may support a lower part of the display unit 250, thereby preventing the display unit 250 from leaning to one side. The housing 300 may have a shape, in which an entire surface of at least one side of the housing 300 has curvature. Hence, an appearance of the display device 10 may be improved.

The housing 300 may shield the components for driving the display device 10. For example, the housing 300 may shield at least one printed circuit board (PCB). A detailed coupling structure and a coupling method of the at least one PCB will be described later.

An electromagnetic wave emitted from the at least one PCB may be transferred to the housing 300. Hence, although not shown, the housing 300 may include an inner housing formed of a conductive material and an outer housing covering the inner housing, but is not limited thereto. The housing 300 may be one body formed of a conductive material.

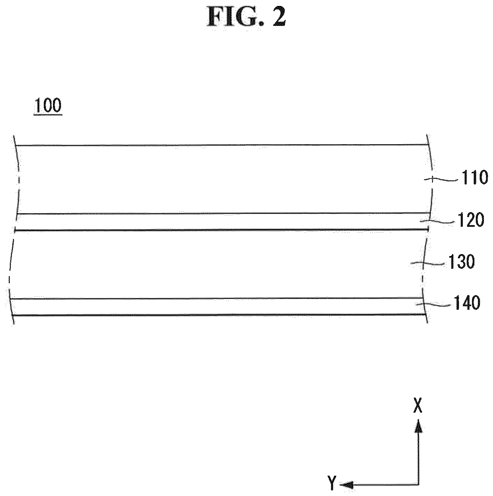

Referring to FIG. 2, the display panel 100 may include a transparent substrate 110, an upper electrode 120, an organic emission layer 130, and a lower electrode 140. The transparent substrate 110, the upper electrode 120, the organic emission layer 130, and the lower electrode 140 may be sequentially formed according to one embodiment.

The transparent substrate 110 and the upper electrode 120 may include a transparent material. The lower electrode 140 may include an opaque material. However, the embodiment of the invention is not limited thereto. The lower electrode 140 may include a transparent material, for example, indium tin oxide (ITO). In this instance, light may be emitted to one surface of the lower electrode 140.

When a voltage is applied to the upper electrode 120 and the lower electrode 140, light emitted from the organic emission layer 130 may be transmitted through the upper electrode 120 and the transparent substrate 110 and may be emitted to the outside. In this instance, a shielding plate may be added to the rear of the lower electrode 140, so that light is reflected from the lower electrode 140 and emitted to the front of the display panel 100.

The display device 10 according to the embodiment of the invention may be the OLED display. Hence, the display device 10 does not require a separate light source which may reduce its volume and weight. Further, because a response speed of the OLED display is more than 1000 times a response speed of the liquid crystal display, image sticking may not be generated in the OLED display when the OLED display displays the image.

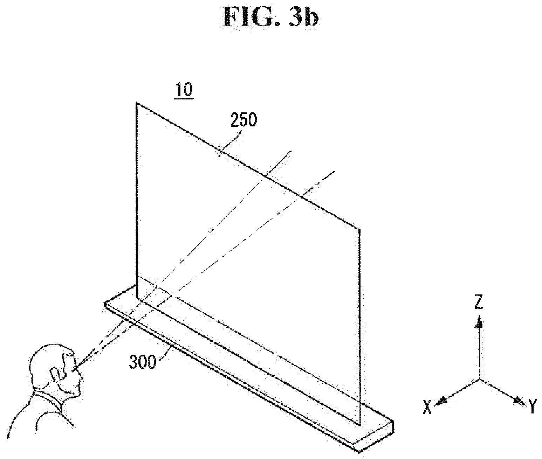

Referring to FIGS. 3(a) and 3(b), the display unit 250 of the display device 10 according to the embodiment of the invention may include a transparent material. Namely, the back cover may include a transparent material. For example, the back cover may include glass or tempered glass.

A user may watch an image or the screen displayed on the display unit 250 when the display device 10 is driven. On the other hand, when the display device 10 is not driven, the user may observe background that is at the rear of the display unit 250 through the display unit 250.

The display unit 250 of the display device 10 according to the embodiment of the invention may be transparent. Hence, the user may feel that the appearance of the display device 10 is neat.

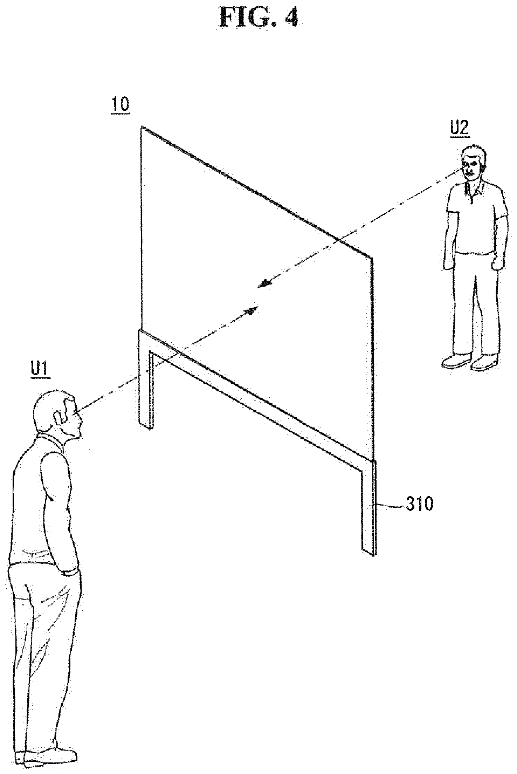

FIGS. 4, 5, 6(a), 6(b), 7(a), 7(b), 8(a), 8(b), 9(a), 9(b), 10(a), 10(b), 10(c), 11(a), 11(b), 12(a), and 12(b) illustrate an operation of a display device according to various exemplary embodiments of the invention.

As shown in FIGS. 4, 5, 6(a), 6(b), 7(a), 7(b), 8(a), 8(b), 9(a), 9(b), 10(a), 10(b), 10(c), 11(a), 11(b), 12(a), and 12(b), the display device 10 according to the various exemplary embodiments of the invention may be transparent or translucent, and thus the other side of the display device 10 may be observed through the display device 10 and vice versa. See, for example, FIG. 4.

As shown in FIG. 4, the display device 10 according to the embodiment of the invention may be positioned on a bracket 310. The display device 10 may be positioned between two spaces occupied by users U1 and U2, respectively. For example, the display device 10 may be used in a state where it is not attached to a wall. In such an installed state of the display device 10, the users U1 and U2 may observe both a front side and a back side of the display device 10. Namely, the first user U1 may observe the display device 10 at the front side of the display device 10, and the second user U2 may observe the display device 10 at the back side of the display device 10.

At least a portion of the display device 10 may be in a transparent state. Thus, the first user U1 positioned in front (i.e., at the front side) of the display device 10 may observe the second user U2 positioned in the rear (i.e., at the back side) of the display device 10 through the display device 10.

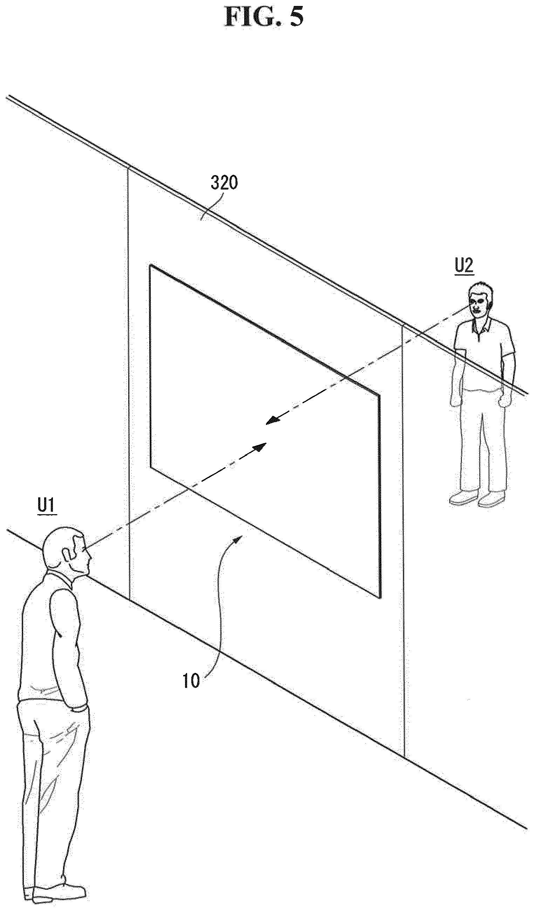

As shown in FIG. 5, the display device 10 according to the embodiment of the invention may be attached to a wall 320, which may be transparent. The transparent wall 320 may be partially or entirely made of a transparent material. For example, the transparent wall 320 may be made of glass material. For example, the transparent wall 320 may be a portion of a show window. At least a portion of the display device 10 may be in a transparent state. Thus, the user may observe the other side of the display device 10 through the display device 10 attached to the transparent wall 320.

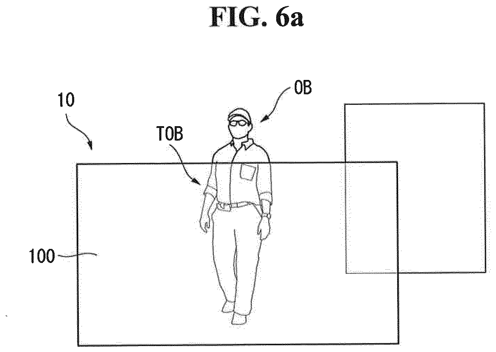

As shown in FIG. 6(a), an object OB at the rear side of the display device 10 may be observed through the display panel 100 of the display device 10. Namely, a portion TOB of the object OB overlapping the display device 10 may be observed through the display panel 100 at the front side.

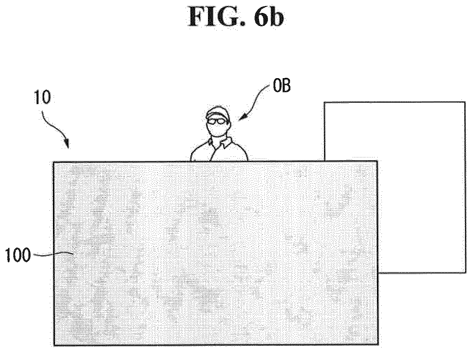

As shown in FIG. 6(b), the display device 10 may be driven to change to a state where the object OB at the rear side of the display device 10 cannot be observed through the display panel 100 at the front side. Namely, at least a portion of the display panel 100 may be changed to an opaque state.

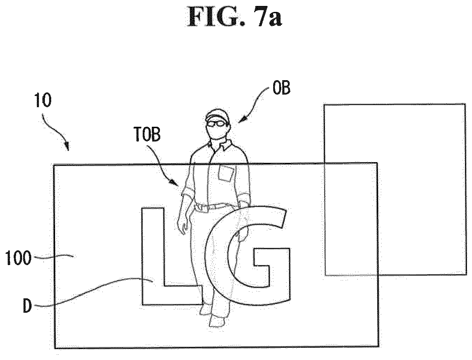

As shown in FIG. 7(a), the display device 10 may be in a transparent state. The display device 10 of the transparent state may display an image D. The displayed image D may be positioned at a location overlapping a portion TOB of the object OB overlapping the display device 10. When a portion of the image D and the portion TOB of the object OB overlap each other, recognizability of the overlapped portion of the image D may be reduced.

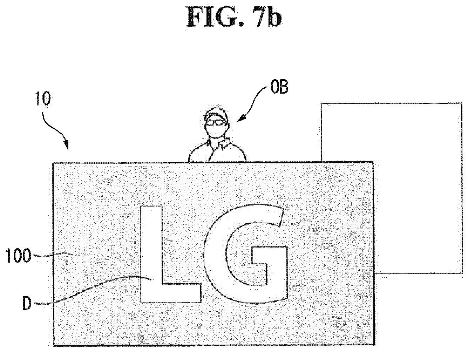

As shown FIG. 7(b), the display device 10 may be in an opaque state. For example, the display device 10 may be driven to change from a transparent state to an opaque state. When the display device 10 is in the opaque state, recognizability of the image D displayed on the display device 10 may increase. Namely, because the portion TOB of the object OB positioned at the rear side of the display device 10 overlapping with the image D does not interfere with the image D, and thus the recognizability of the image D may increase.

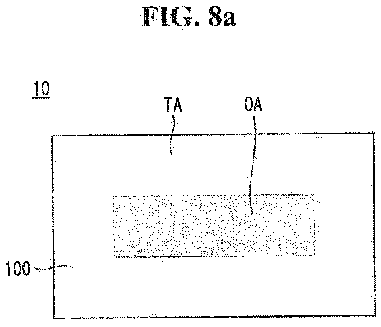

As shown in FIG. 8(a), the display device 10 may be driven to have a transparent area TA and an opaque area OA. For example, a central area of the display panel 100 may be the opaque area OA, and the transparent area TA may be positioned to surround the opaque area OA. The display device 10 may display an image in the opaque area OA.

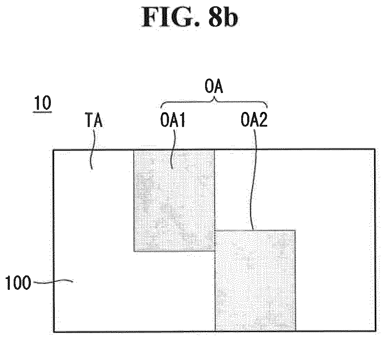

As shown in FIG. 8(b), the opaque area OA may be divided into a plurality of areas. For example, the opaque area OA may be divided into a first opaque area OA1 and a second opaque area OA2. At least a portion of the first opaque area OA1 and at least a portion of the second opaque area OA2 may be separated from each other.

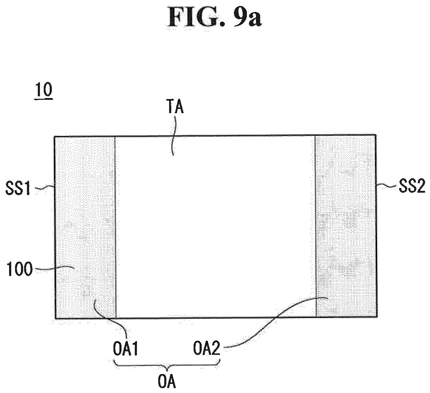

As shown in FIG. 9(a), an opaque area OA may include a plurality of opaque areas which are separated from one another. For example, a first opaque area OA1 may be positioned along the first short side SS1, and a second opaque area OA2 may be positioned along the second short side SS2. Namely, the first and second opaque areas OA1 and OA2 may be positioned on the left and right sides of the display panel 100. Such a configuration of the opaque area OA may be used depending on kinds of contents displayed through the display device 10. For example, in case of content (for example, a movie) in which a width proportion is relatively greater than a height proportion, the first and second opaque areas OA1 and OA2 may be removed, and the entire screen of the display panel 100 may be used as a transparent area TA on which the content is displayed. Further, in case of content (for example, news) having a general aspect ratio, the first and second opaque areas OA1 and OA2 may be displayed, and the transparent area TA positioned in the middle of the display panel 100 may be used to display the content.

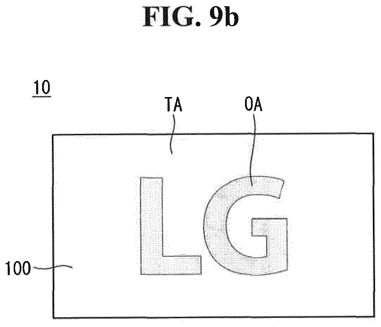

As shown in FIG. 9(b), the opaque area OA may be configured in a predetermined shape. For example, a company logo, etc., may be displayed. When the display device 10 is turned off, the opaque area OA may be displayed. When the display device 10 is turned on, the entire screen of the display panel 100 may be used as the transparent area TA. Namely, when the display device 10 is turned off, an advertising effect of the company may be increasingly obtained by displaying the company logo, etc.

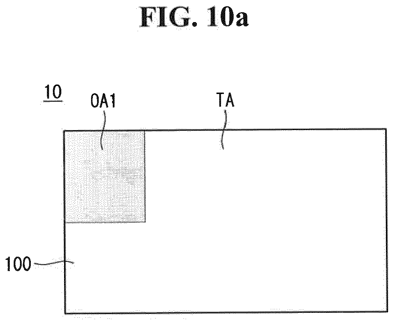

As shown in FIGS. 10(a)-10(c), at least one of a location and a size of an opaque area OA may be changed over time.

As shown in FIG. 10(a), a first opaque area OA1 may be displayed at a predetermined location of the display device 10 at a predetermined time point "t".

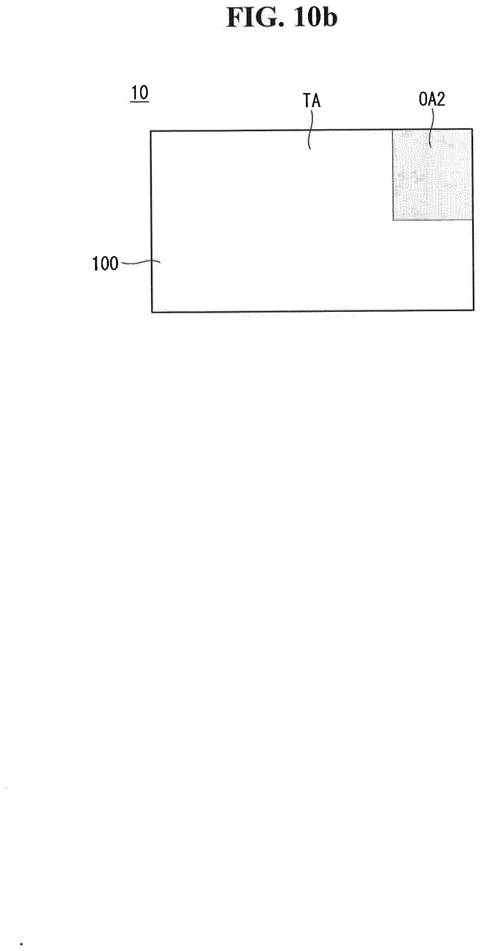

As shown in FIG. 10(b), a second opaque area OA2 may be displayed at another location of the display device 10 at a time point (t+1) after time has passed from the predetermined time point "t".

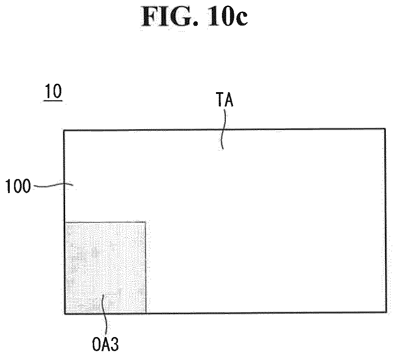

As shown in FIG. 10(c), a third opaque area OA3 may be displayed at another location of the display device 10 at a time point (t+2) after time has passed from the time point (t+1). Namely, a location of an opaque area OA may change over time.

The location of the opaque area OA may be changed depending on the content displayed on the display device 10. For example, when a moving picture is displayed on the display device 10, the location of the opaque area OA may be changed depending on a display location of the moving picture, so as to increase visibility of the moving picture.

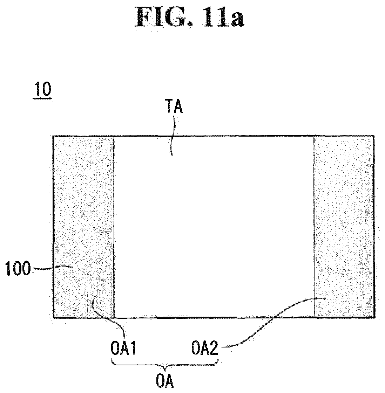

As shown in FIG. 11(a), an opaque area OA may be positioned on the left and right sides of the display device 10 at a predetermined time point "t". For example, when content having a general aspect ratio is displayed, first and second opaque areas OA1 and OA2 may be positioned on the left and right sides of the display device 10 based on the aspect ratio of the content.

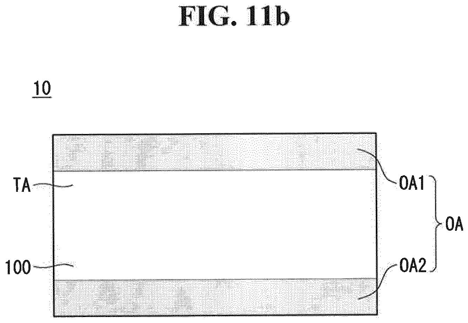

As shown in FIG. 11(b), an opaque area OA may be positioned on the upper and lower sides of the display device 10 at a predetermined time point (t+1). For example, when content, in which a width proportion is greater than a height proportion, is displayed, first and second opaque areas OA1 and OA2 may be positioned on the upper and lower sides of the display device 10 based on an aspect ratio of the content.

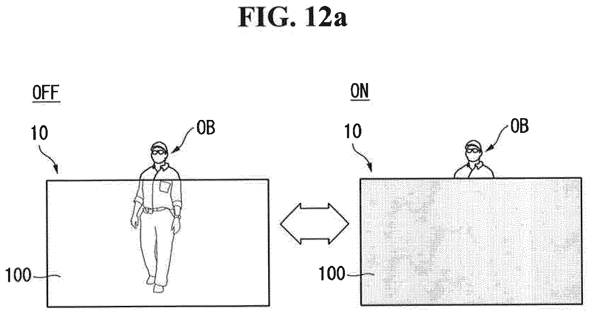

As shown in FIGS. 12(a)-12(b), the display device 10 may be in a specific state when it is turned off.

As shown in FIG. 12(a), when the display device 10 according to the embodiment of the invention is turned off, the display panel 100 may be in a transparent state. Namely, when the display device 10 is turned off, an object OB positioned at the rear of the display device 10 may be observed through the display panel 100. When the display device 10 is changed from the OFF-state to the On-state, the display panel 100 may be changed from the transparent state to an opaque state. Namely, in this instance, the object OB positioned at the rear of the display device 10 cannot be observed through the display panel 100.

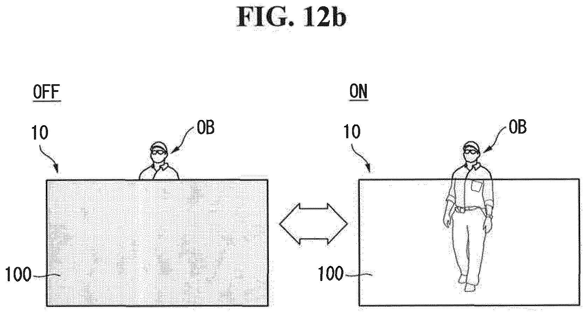

As shown in FIG. 12(b), when the display device 10 according to the embodiment of the invention is turned off, the display panel 100 may be in the opaque state. Namely, when the display device 10 is turned off, the object OB positioned at the rear of the display device 10 cannot be observed through the display panel 100. In this instance, when the display device 10 is turned on, the display device 10 may be changed from the opaque state to the transparent state. In this instance, the object OB positioned at the rear of the display device 10 can be observed through the display panel 100.

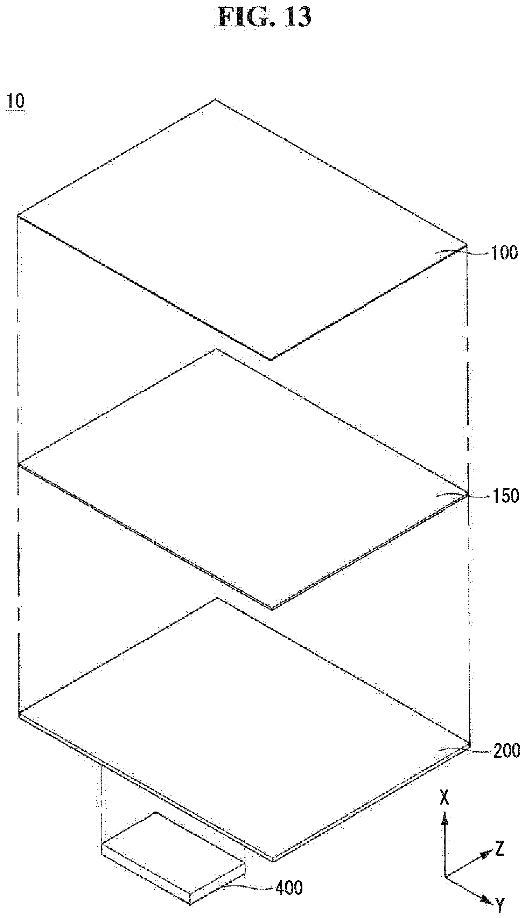

FIGS. 13, 14, 15(a), 15(b), 16, 17, 18(a), 18(b), 19(a), 19(b), 20(a), 20(b), 20(c), 21(a), 21(b), 22, 23(a), 23(b), 24(a), 24(b),and 24(c) illustrate configuration of a display device according to various exemplary embodiments of the invention.

As shown in FIGS. 13, 14, 15(a), 15(b), 16, 17, 18(a), 18(b), 19(a), 19(b), 20(a), 20(b), 20(c), 21(a), 21(b), 22, 23(a), 23(b), 24(a), 24(b), and 24(c), the display device 10 according to the various exemplary embodiments of the invention may include a shielding film, of which transparency varies depending on a control signal.

As shown in FIG. 13, the display device 10 according to the embodiment of the invention may include a display panel 100, a back cover 200, an AV box 400, and a shielding film 150.

The display panel 100 may be an area displaying an image. The display panel 100 may be a display panel not requiring a backlight unit due to its self-emission structure, for example OLED structure. Also, the display device 10 may be configured to be thinner than other types of display devices.

At least a portion of the display panel 100 may be substantially transparent if not totally transparent. Thus, when other configuration of the display device 10 is transparent, the display device 10 may be configured to be entirely substantially transparent if not entirely transparent.

The back cover 200 may be configured to provide rigidity to the display panel 100. The back cover 200 may be positioned on a back surface of the display panel 100 which is configured as a thin film. The display panel 100, etc., may be attached to the back cover 200. When the components of the display device 10 are attached to the back cover 200, the display panel 100, etc., may maintain a designed shape such as a slim shape.

At least a portion of the back cover 200 may be made of a transparent or translucent material. For example, the back cover 200 may be made of glass material.

The AV box 400 may provide various control signals for the display device 10. Various PCBs may be embedded in the AV box 400. The AV box 400 may be attached to a back surface of the back cover 200. Alternatively, the AV box 400 may be positioned in the housing 300 (see, for example, FIG. 1).

The shielding film 150 may be positioned between the display panel 100 and the back cover 200. The shielding film 150 may substantially have the same size as the display panel 100. For example, the total area of the shielding film 150 may be substantially or the same as the total area of the display panel 100. The size of the shielding film 150 may be substantially or the same as the size of an effective display area of the display panel 100.

The transparency of the shielding film 150 may vary depending on the control signal. Namely, the shielding film 150 may be changed from a transparent state to an opaque state, and vice versa. When the shielding film 150 is changed to the opaque state, it may be difficult for an observer at one side (or the other side) of the display device 10 to observe an object at the other side (or one side) of the display device 10.

The shielding film 150 may be changed to the transparent state when the control signal is inputted, or may be changed to the transparent state when there is no control signal input. For example, the shielding film 150 may be changed to the transparent state when the display device 10 is turned off, or may be changed to the opaque state when the control signal is turned off.

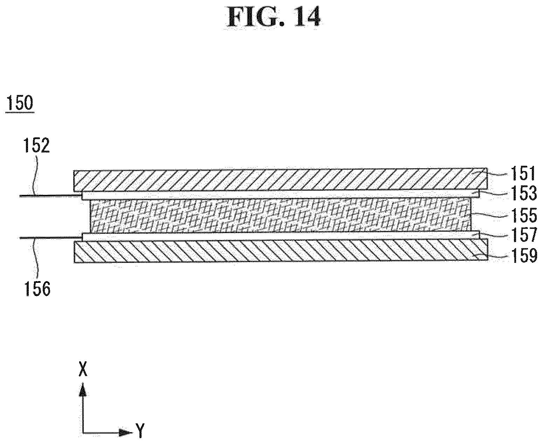

As shown in FIG. 14, the shielding film 150 may include a first film 151, a first conductive layer 153 positioned at a back surface of the first film 151, a discoloration layer 155 positioned at a back surface of the first conductive layer 153, a second conductive layer 157 positioned at a back surface of the discoloration layer 155, and a second film 159 positioned at a back surface of the second conductive layer 157.

The first and second films 151 and 159 may form an external surface of the shielding film 150. Namely, the first and second films 151 and 159 may form both sides of the shielding film 150. The first and second films 151 and 159 may be formed of a transparent material. For example the first and second films 151 and 159 may be formed of polyethylene terephthalate (PET).

The first and second conductive layers 153 and 157 may be positioned inside the first and second films 151 and 159, respectively. The first and second conductive layers 153 and 157 may be respectively connected to first and second electrodes 152 and 156, respectively.

One of the first and second electrodes 152 and 156 may be a driving electrode, and the other may be a common electrode. For example, the second electrode 156 may be the driving electrode, and the first electrode 152 may be the common electrode. In this instance, the second conductive layer 157 connected to the second electrode 156 may serve as the driving electrode, and the first conductive layer 153 connected to the first electrode 152 may serve as the common electrode. A predetermined electric current may be supplied to the first electrode 152 serving as the common electrode.

Transparency of the discoloration layer 155 may vary depending on the control signal through the first and second conductive layers 153 and 157. For example, the discoloration layer 155 may include a liquid crystal element. The transparency of the discoloration layer 155 including the liquid crystal element may vary depending on the control signal applied to at least one of the first and second conductive layers 153 and 157. Namely, the discoloration layer 155 may be transparently or opaquely seen due to liquid crystals rearrangement in response to the control signal.

The transparency of the discoloration layer 155 may vary depending on the control signal. For example, the transparency of the discoloration layer 155 may vary depending on an amount of applied electric current and/or a magnitude of applied voltage. In this instance, the discoloration layer 155 may be sequentially changed from the transparent state to the opaque state via a translucent state. In other words, the transparency of the discoloration layer 155 may be sequentially changed.

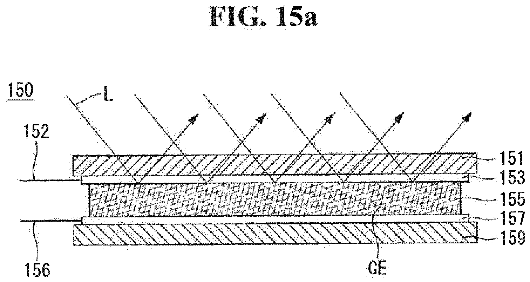

As shown in FIG. 15(a), when a predetermined signal is inputted to the first and second conductive layers 153 and 157 through the first and second electrodes 152 and 156, respectively, liquid crystal particles CE inside the discoloration layer 155 may be non-uniformly distributed. The non-uniformly distributed liquid crystal particles CE of the discoloration layer 155 may block the discoloration layer 155 from transmitting light L. When the non-uniformly distributed liquid crystal particles CE block the discoloration layer 155 from transmitting the light L, the discoloration layer 155 may be opaquely seen.

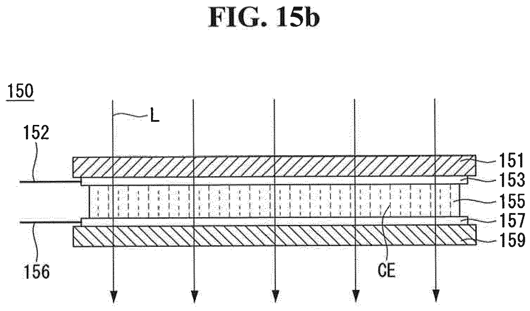

As shown in FIG. 15(b), liquid crystal particles CE inside the discoloration layer 155 may be uniformly distributed in one direction. Namely, the liquid crystal particles CE may be uniformly distributed so that the discoloration layer 155 can transmit light L. As the discoloration layer 155 transmits the light L, the discoloration layer 155 may be transparently seen.

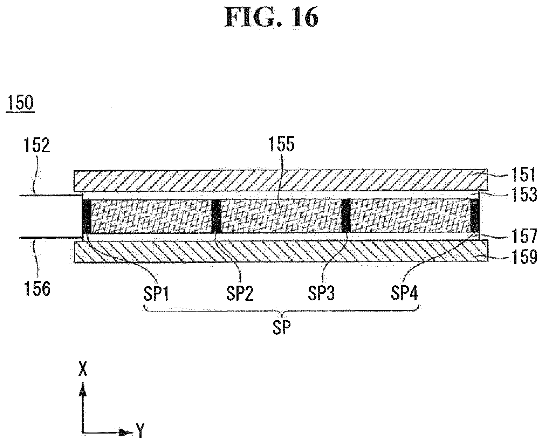

As shown in FIG. 16, the discoloration layer 155 may include a plurality of structures SP. The structures SP may include shielding layers SP1 and SP4 and spacers SP2 and SP3.

The shielding layers SP1 and SP4 may be positioned outside the discoloration layer 155. The shielding layers SP1 and SP4 may be positioned on both sides of the discoloration layer 155. The shielding layers SP1 and SP4 may prevent the liquid crystal particles CE from being discharged to the outside of the discoloration layer 155.

The spacers SP2 and SP3 may be positioned inside the discoloration layer 155. The spacers SP2 and SP3 positioned inside the discoloration layer 155 may keep a height of the discoloration layer 155 constant. The plurality of spacers SP2 and SP3 may be separated from one another.

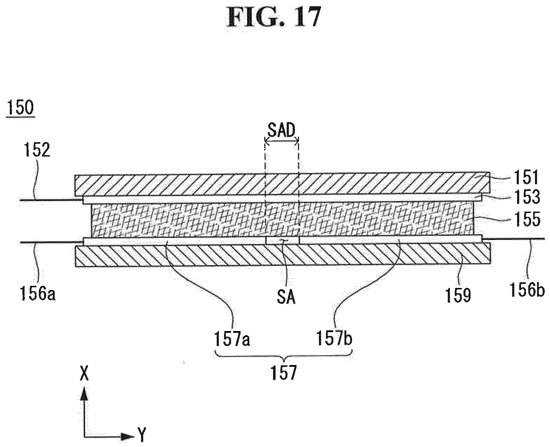

As shown in FIG. 17, the second conductive layer 157 may be divided into a plurality of areas. For example, a conductive layer 157a and a conductive layer 157b may be separated from each other by a partition portion SA. The conductive layer 157a may be connected to an electrode 156a, and the conductive layer 157b may be connected to an electrode 156b. Namely, the conductive layers 157a and 157b may be electrically independent from each other.

The partition portion SA may have non-conductive characteristics. For example, the partition portion SA may have the non-conductive characteristics by partially removing the conductive layers 157a and 157b formed of a conductive material or by filling a removed area of the conductive layers 157a and 157b with a non-conductive material.

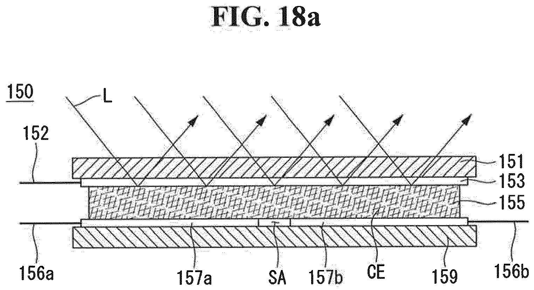

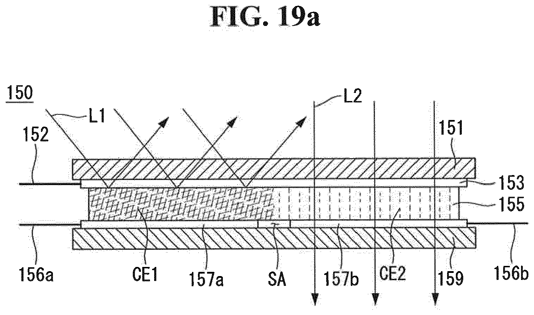

As shown in FIGS. 18(a)-18(b) and 19(a)-19(b), a transparent or opaque area may be formed using the second conductive layer 157 including a plurality of areas through various methods.

As shown in FIG. 18(a), the control signal may be applied to the conductive layers 157a and 157b through the electrodes 156a and 156b. For example, the control signal of a predetermined voltage may be inputted. When the control signal is inputted through the conductive layers 157a and 157b serving as the driving electrode, light L may be blocked from being transmitted by the discoloration layer 155 due to the non-uniform distribution of the liquid crystals CE. Thus, the entire portion of the discoloration layer 155 may be opaque.

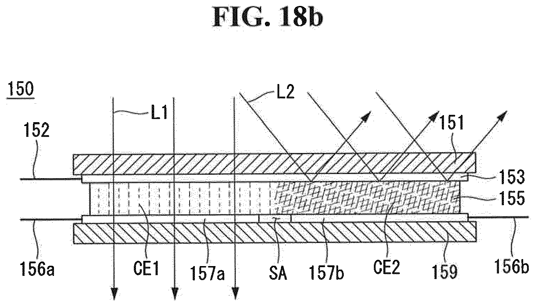

As shown in FIG. 18(b), different control signals may be applied to the conductive layer 157a and the conductive layer 157b. For example, a control signal of a voltage "A" may be applied to the conductive layer 157a, and a control signal of a voltage "B" may be applied to the conductive layer 157b. The control signal of the voltage "A" may align first liquid crystals CE1 corresponding to the conductive layer 157a, and the control signal of the voltage "B" may distribute second liquid crystals CE2 corresponding to the conductive layer 157b. Thus, first light L1 of an area corresponding to the conductive layer 157a may be transmitted by the discoloration layer 155, and second light L2 of an area corresponding to the conductive layer 157b may not be transmitted by the discoloration layer 155. Namely, the area corresponding to the conductive layer 157a may be transparent, and the area corresponding to the conductive layer 157b may be opaque.

As shown in FIG. 19(a), different control signals may be applied to the conductive layer 157a and the conductive layer 157b. For example, a control signal of a voltage "B" may be applied to the conductive layer 157a, and a control signal of a voltage "A" may be applied to the conductive layer 157b. In this instance, unlike (b) of FIG. 18, first light L1 of an area corresponding to the conductive layer 157a may not be transmitted by the discoloration layer 155, and second light L2 of an area corresponding to the conductive layer 157b may be transmitted by the discoloration layer 155.

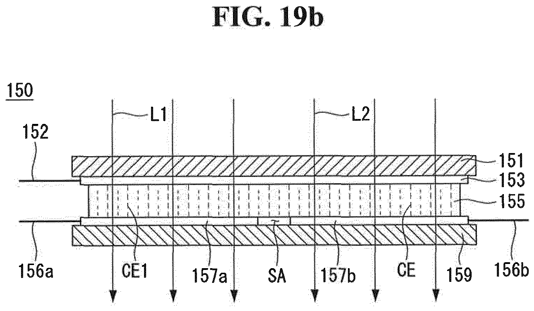

As shown in FIG. 19(b), when the same voltage is applied to the conductive layers 157a and 157b, the entire portion of the discoloration layer 155 may transmit light. Namely, the discoloration layer 155 may be transparent.

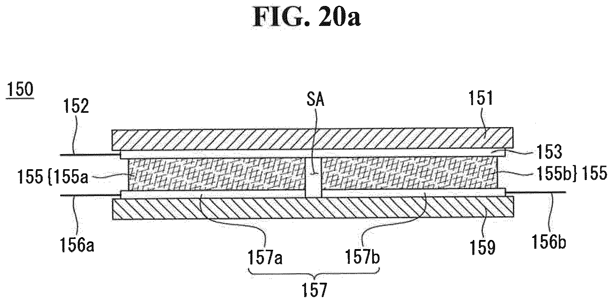

As shown in FIGS. 20(a)-20(c), the partition portion SA may be configured in various shapes.

As shown in FIG. 20(a), the partition portion SA may be positioned in the second conductive layer 157 and the discoloration layer 155. Because the partition portion SA is positioned in the discoloration layer 155, a change from the transparent state to the opaque state or a change from the opaque state to the transparent state may be certainly performed in a first discoloration layer 155a and a second discoloration layer 155b.

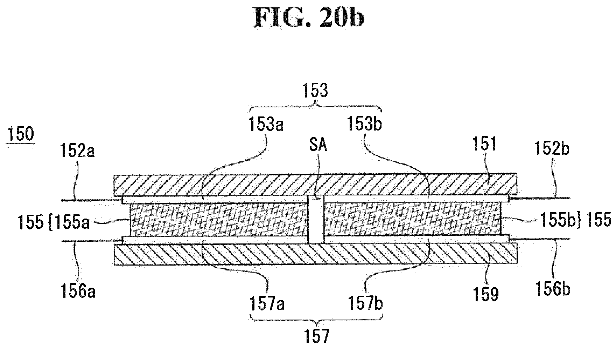

As shown in FIG. 20(b), the partition portion SA may be positioned in the first and second conductive layers 153 and 157 and the discoloration layer 155. Thus, the first and second conductive layers 153 and 157 may separately operate. Further, a change between the transparent state and the opaque state may be independently performed in the plurality of discoloration layers 155a and 155b.

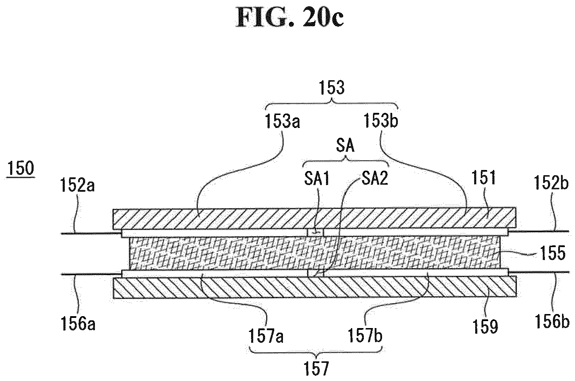

As shown in FIG. 20(c), the partition portion SA may be positioned in the first and second conductive layers 153 and 157. Thus, the first and second conductive layers 153 and 157 may separately operate. Because the first and second conductive layers 153 and 157 can separately operate, a plurality of areas independently operating may be formed while minimizing the division of the first and second conductive layers 153 and 157.

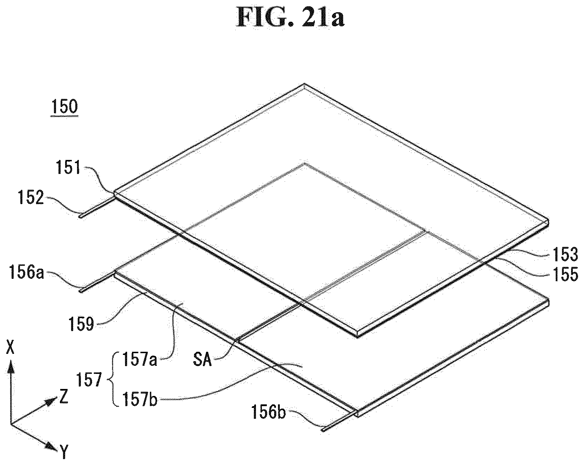

As shown in FIG. 21(a), the second conductive layer 157 may be divided into a plurality of parts. For example, the second conductive layer 157 may be divided into a conductive layer 157a and a conductive layer 157b. In this instance, a first area corresponding to the conductive layer 157a and a second area corresponding to the conductive layer 157b may operate independently.

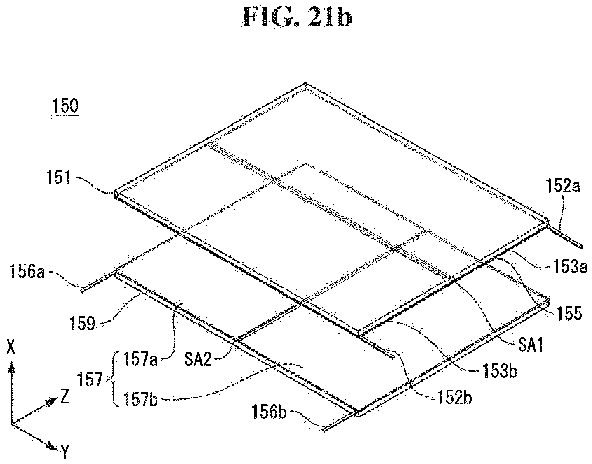

As shown in FIG. 21(b), the second conductive layer 157 may be divided into a conductive layer 157a and a conductive layer 157b. The first conductive layer 153 may be divided into a conductive layer 153a and a conductive layer 153b. A formation direction of a first partition portion SA1 for dividing the first conductive layer 153 into the conductive layers 153a and 153b may be different from a formation direction of a second partition portion SA2 for dividing the second conductive layer 157 into the conductive layers 157a and 157b. For example, the first partition portion SA1 may be formed in a horizontal direction (Y-direction), and the second partition portion SA2 may be formed in an orthogonal direction (Z-direction). Thus, the conductive layers 153a and 153b and the conductive layers 157a and 157b may overlap each other to form four division areas.

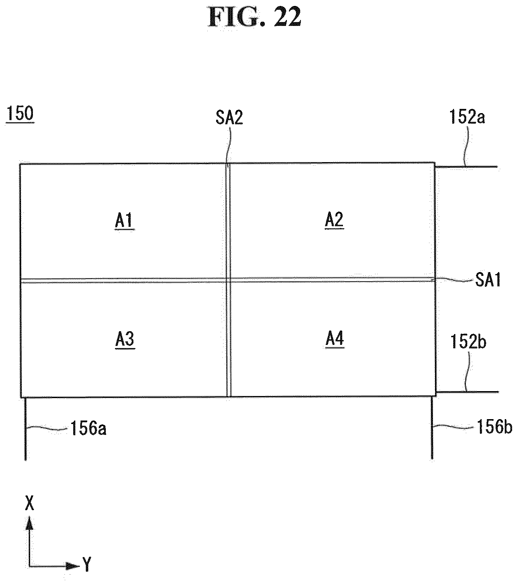

As shown in FIG. 22, first to fourth areas A1 to A4 may be formed by the first and second partition portions SA1 and SA2 formed in the different directions. The first to fourth areas A1 to A4 may operate independently. For example, the first area A1 formed by an overlap of the conductive layer 153a and the conductive layer 157a may operate independently from the second to fourth areas A2 to A4. Namely, when the control signal is applied to the conductive layer 153a and the conductive layer 157a, only the first area A1 may change from a transparent state to an opaque state or from the opaque state to the transparent state. Thus, each of the first and second conductive layers 153 and 157 may obtain an effect of four divisions without dividing each of the first and second conductive layers 153 and 157 into four parts.

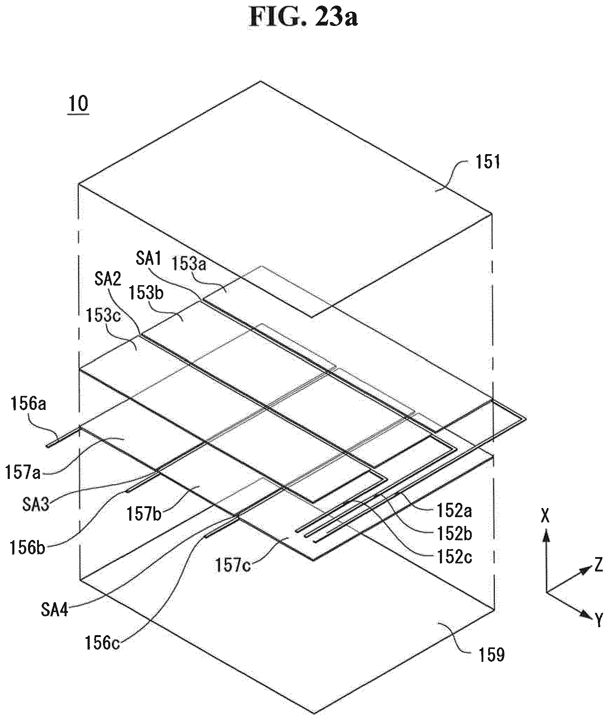

As shown in FIGS. 23(a)-23(b), a plurality of division areas operating independently may be formed while reducing a number of divisions. Thus, a manufacturing process may be simplified.

As shown in FIG. 23(a), the first conductive layer 153 may include conductive layers 153a to 153c partitioned by first and second partition portions SA1 and SA2. The second conductive layer 157 may include conductive layers 157a to 157c partitioned by third and fourth partition portions SA3 and SA4.

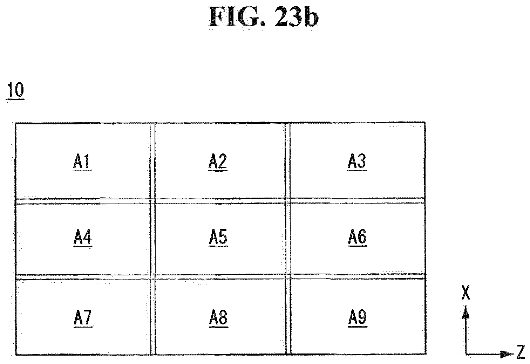

As shown in FIG. 23(b), each of the first conductive layer 153 and the second conductive layer 157 may be divided into three parts, and first to ninth areas A1 to A9 may be formed due to different formation directions of the first and second partition portions SA1 and SA2 and the third and fourth partition portions SA3 and SA4. Thus, the manufacturing process may be simplified. Further, a number of electrodes may be minimized. Namely, although the nine areas are formed, only the first to sixth electrodes 152a to 152c and 156a to 156c are necessary.

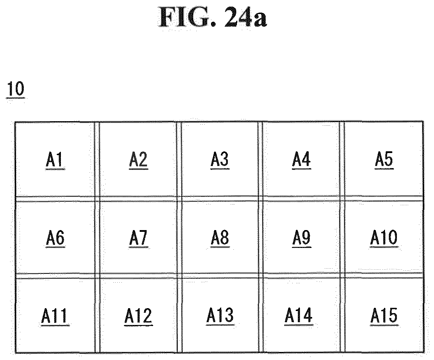

As shown in FIG. 24(a), the conductive layer may be partitioned into first to fifteenth areas A1 to A15.

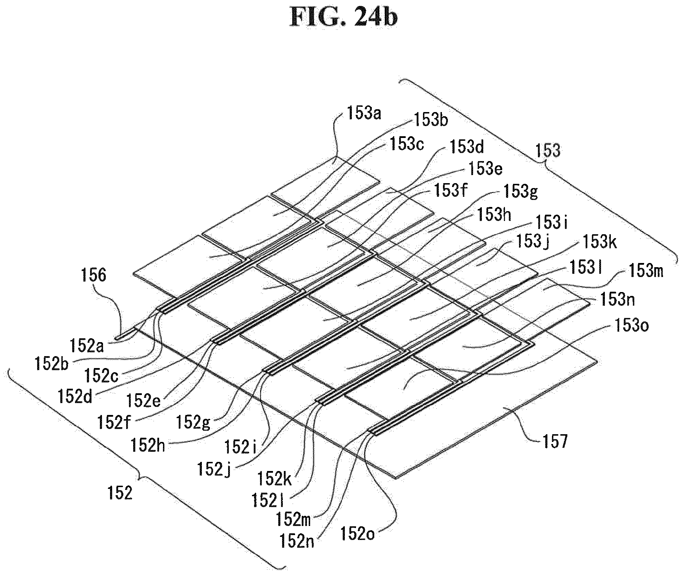

As shown in FIG. 24(b), when only one of the first and second conductive layers 153 and 157 is partitioned, the electrodes of the same number as partitioned areas may be necessary. For example, when the first conductive layer 153 is partitioned into conductive layers 153a to 153o, first to fifteenth electrodes 152a to 152o may be necessary. Thus, the manufacturing process may become complicated, and a structural design for arranging the plurality of electrodes 152 may be necessary.

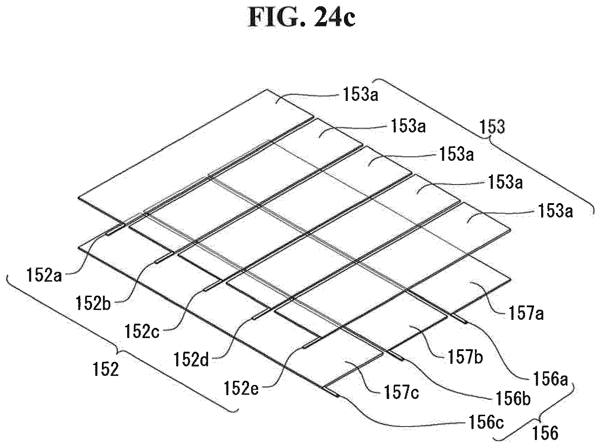

As shown in FIG. 24(c), when each of the first and second conductive layers 153 and 157 is partitioned into parts in different directions (for example, first conductive layer in five parts and second conductive layer in three parts), the electrodes 152 and 157, of which a number is less than a number of partitioned areas, may be necessary. For example, when the number of partitioned areas is fifteen, the eight electrodes 152a to 152e and 157a to 157c may be necessary.

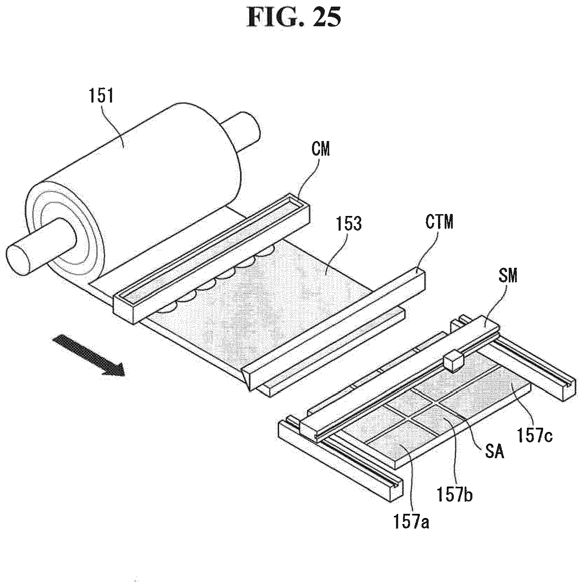

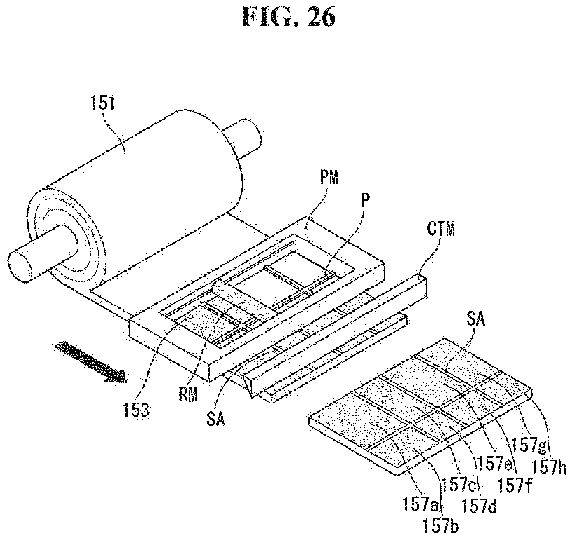

FIGS. 25 and 26 illustrate various methods for manufacturing the display device according to the embodiment of the invention.

As shown in FIGS. 25 and 26, the shielding film 150 of the display device 10 according to the embodiment of the invention may be manufactured through various methods.

As shown in FIG. 25, the first film 151 may be configured in the form of a roll. When the first film 151 is configured in the form of the roll, the manufacturing process may be easily performed. Namely, the roll-type first film 151 can be easily carried and also easily provided. Advantages of the roll-type first film 151 can be certainly understood, compared to a difficulty generated when the first film 151 is formed of glass. FIGS. 25 and 26 show that the first film 151 is configured in the form of the roll, as an example. The second film 150 may be configured in the form of a roll.

When the first film 151 is provided, a process for coating the first conductive layer 153 using a nozzle CM may be performed.

When the first conductive layer 153 is coated on the first film 151, a process for cutting the first film 151 in the proper size using a cutter CTM may be performed.

When the first film 151 is cut, a partition portion SA may be formed using a scriber SM. Namely, as the scriber SM moves in the horizontal direction and/or the vertical direction, a groove may be formed. The second film 159 may be formed through the processes similar to the first film 151.

As shown in FIG. 26, the shielding film 150 according to the embodiment of the invention may be manufactured through another method.

When the roll type first film 151 is provided, a pattern mask PM may be positioned on the first film 151. The pattern mask PM may have a lattice pattern P.

The first conductive layer 153 may be coated on the first film 151 using a coating roller RM on the pattern mask PM.

As the coating roller RM moves on the pattern mask PM having the lattice pattern P, a partition portion SA may be naturally formed. Thus, the scriber SM (refer to FIG. 25) may not be used to manufacture the shielding film 150 according to the embodiment of the invention.

After the partition portion SA is formed using the pattern mask PM, the first film 151 may be cut in the proper size using a cutter CTM.

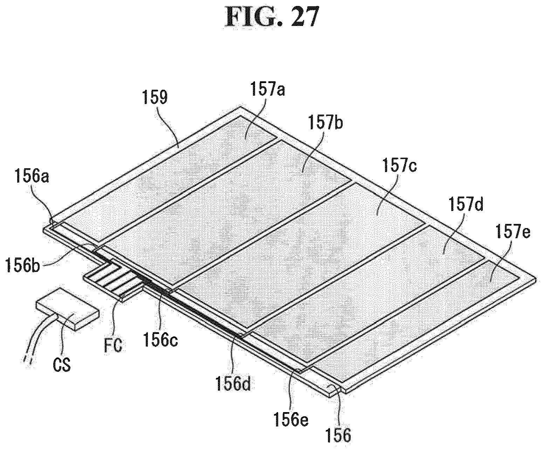

FIG. 27 illustrates a connection structure of the display device according to the embodiment of the invention.

As shown in FIG. 27, a plurality of electrodes 156a to 156e may be formed on the shielding film 150 of the display device 10 according to the embodiment of the invention. Namely, the conductive layer 157 may be partitioned into a plurality of conductive layers 157a to 157e, and the plurality of electrodes 156a to 156e, respectively, extending from the plurality of conductive layers 157a to 157e may exist.

The electrodes 156a to 156e may form a path along the edge of the second film 159. The electrodes 156a to 156e forming the path along the edge of the second film 159 may be connected through a flat cable FC.

The flat cable FC may be connected to a main PCB (not shown) of the display device 10.

The embodiments and/or the configurations of the invention may be combined with each other. For example, a configuration "A" described in one embodiment of the invention and the drawings and a configuration "B" described in another embodiment of the invention and the drawings may be combined with each other. Namely, although the combination between the configurations is not directly described, the combination is possible except in the instance where it is described that the combination is impossible. This is certain considering that the embodiment of the invention relates to the display device.

Any reference in this specification to "one embodiment," "an embodiment," "exemplary embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display device comprising:
a display panel (100), at least a portion of the display panel (100) being transparent and formed of a transparent material;
a shielding film (150) positioned at a rear side of the display panel (100), wherein the shielding film (150) is operable in a first state and in a second state, in which in the first state, at least a portion of the shielding film (150) is transparent, and in the second state, the at least a portion of the shielding film (150) is opaque; and
a back cover (200) positioned at a rear side of the shielding film (150), at least a portion of the back cover being formed of a transparent material, wherein the shielding film (150) includes:
a first film (151) positioned at the rear side of the display panel (100);
a second film (159) positioned at a rear side of the first film (151);
a discoloration layer (155) operable in said first state or in said second state and positioned between the first film (151) and the second film (159);
a first conductive layer (153) positioned between the first film (151) and the discoloration layer (155), the first conductive layer (153) being divided into a plurality of parts separated from one another; and
a second conductive layer (157) positioned between the discoloration layer (155) and the second film (159), the second conductive layer (157) being divided into a plurality of parts separated from one another, **characterized**
**in that** the first film (151) and the second film (159) are flexible, and in that the first conductive layer (153) is obtained through a coating process on the first film (151) and the second conductive layer (157) is obtained through a coating process on the second film (159).

2. The display device of claim 1, **characterized in that** the first film (151) and the second film (159) are flexible so as to be windable on a roll.

3. The display device of claim 2, **characterized in that** the plurality of parts of the first conductive layer (153) are elongated in a first direction, and the plurality of parts of the second conductive layer (157) are elongated in a second direction different from the first direction.

4. The display device of claim 3, **characterized in that** the plurality of parts of the first conductive layer (153) are positioned along the second direction, and the plurality of parts of the second conductive layer (157) are positioned along the first direction.

5. The display device of any one of claims 2 to 4, **characterized in that** the first conductive layer (153) includes at least one first partition portion (SA1) elongated in the first direction, and the second conductive layer (157) includes at least one second partition portion (SA2) elongated in the second direction.

6. The display device of claim 5, **characterized in that** the plurality of parts of the first conductive layer (153) and the at least one first partition portion (SA1) are positioned alternately along the second direction, and the plurality of parts of the second conductive layer (157) and the at least one second partition portion (SA2) are positioned alternately along the first direction.

7. The display device of any one of claims 3 to 6, **characterized in that** the first direction forms a right angle with respect to the second direction.

8. The display device of any one of claims 2 to 7, **characterized in that** one of the first and second conductive layers (153, 157) is connected to a driving electrode (152) to which a control signal is applied, and the other conductive layer (153, 157) is connected to a common electrode (156).

9. The display device of any one of claims 2 to 8, **characterized by** further comprising first and second electrodes (152, 156) connected to the first and second conductive layers (153, 157),
wherein the first and second electrodes (152, 156) form a path along at least one edge of the shielding film (150); and/or
wherein the discoloration layer (155) changes from said transparent state to said opaque state in response to a control signal applied to at least one of the first and second conductive layers (153, 157).

10. The display device of any one of claims 2 to 9, **characterized in that** the discoloration layer (155) includes:
a plurality of liquid crystal elements; and
a plurality of spacers (SP2, SP3) separately disposed from each other inside the discoloration layer (155) and supporting the discoloration layer (155) in a thickness direction.

11. The display device of any one of claims 1 to 10, **characterized by** further comprising a controller configured to apply a control signal, so that the shielding film (150) is in one state of said first state and said second state, in which, in the first state, at least a portion of the shielding film (150) is transparent, and in the second state, the at least a portion of the shielding film (150) is opaque.

12. The display device of any one of claims 1 to 11, **characterized in that** an opaque area is included in the at least a portion of the shielding film (150).

13. The display device of claim 11, **characterized in that** the controller is configured to apply the control signal that causes an upper and lower portion of the shielding film (150) to be opaque or causes a left and right side of the shielding film (150) to be opaque based on the aspect ratio of a content to be displayed on the display device.

## Patentansprüche

1. Anzeigegerät umfassend:
ein Anzeigefeld (100), wobei mindestens ein Teil des Anzeigefelds (100) transparent ist und aus einem transparenten Material gebildet ist;
ein Abschirmfilm (150), der an einer Rückseite des Anzeigefelds (100) angeordnet ist, wobei der Abschirmfilm (150) in einem ersten Zustand und in einem zweiten Zustand betrieben werden kann, wobei in dem ersten Zustand mindestens ein Teil des Abschirmfilms (150) transparent ist, und in dem zweiten Zustand mindestens ein Teil des Abschirmfilms (150) undurchsichtig ist; und
eine hintere Abdeckung (200), die an einer Rückseite des Abschirmfilms (150) angeordnet ist, wobei mindestens ein Teil der hinteren Abdeckung aus einem transparenten Material gebildet ist,
wobei der Abschirmfilm (150) umfasst:
einen ersten Film (151), der an der Rückseite des Anzeigefelds (100) angeordnet ist;
einen zweiten Film (159), der an einer Rückseite des ersten Films (151) angeordnet ist;
eine farbverändernde Schicht (155), die in dem ersten Zustand oder in dem zweiten Zustand betrieben werden kann und zwischen dem ersten Film (151) dem zweiten Film (159) angeordnet ist;
eine erste leitende Schicht (153), die zwischen dem ersten Film (151) und der farbverändernden Schicht (155) angeordnet ist, wobei die erste leitende Schicht (153) in eine Vielzahl von Teilen aufgeteilt ist, die voneinander getrennt sind; und
eine zweite leitende Schicht (157), die zwischen der farbverändernden Schicht (155) und dem zweiten Film (159) angeordnet ist, wobei die zweite leitende Schicht (157) in eine Vielzahl von Teilen aufgeteilt ist, die voneinander getrennt sind, **dadurch gekennzeichnet,**
**dass** der erste Film (151) und der zweite Film (159) flexibel sind, und
**dass** die erste leitende Schicht (153) durch einen Beschichtungsprozess auf dem ersten Film (151) gewonnen wird, und die zweite leitende Schicht (157) durch einen Beschichtungsprozess auf dem zweiten Film (159) gewonnen wird.

2. Anzeigegerät gemäß Anspruch 1, **dadurch gekennzeichnet, dass** der erste Film (151) und der zweite Film (159) flexibel sind, sodass sie auf eine Rolle aufgewickelt werden können.

3. Anzeigegerät gemäß Anspruch 2, **dadurch gekennzeichnet, dass** die Vielzahl von Teilen der ersten leitenden Schicht (153) sich in eine erste Richtung ausdehnen, und die Vielzahl von Teilen der zweiten leitenden Schicht (157) sich in eine zweite Richtung, unterschiedlich von der ersten Richtung, ausdehnen.

4. Anzeigegerät gemäß Anspruch 3, **dadurch gekennzeichnet, dass** die Vielzahl von Teilen der ersten leitenden Schicht (153) entlang der zweiten Richtung angeordnet ist, und die Vielzahl von Teilen der zweiten leitenden Schicht (157) entlang der ersten Richtung angeordnet ist.

5. Anzeigegerät gemäß einem der Ansprüche 2 bis 4, **dadurch gekennzeichnet, dass** die erste leitende Schicht (153) mindestens einen ersten Teilbereich (SA1), der sich in die erste Richtung ausdehnt, einschließt, und die zweite leitende Schicht (157) mindestens einen zweiten Teilbereich (SA2), der sich in die zweite Richtung ausdehnt, einschließt.

6. Anzeigegerät gemäß Anspruch 5, **dadurch gekennzeichnet, dass** die Vielzahl von Teilen der ersten leitenden Schicht (153) und der mindestens eine erste Teilbereich (SA1) abwechselnd entlang der zweiten Richtung angeordnet sind, und die Vielzahl von Teilen der zweiten leitenden Schicht (157) und der mindestens eine zweite Teilbereich (SA2) abwechselnd entlang der ersten Richtung angeordnet sind.

7. Anzeigegerät gemäß einem der Ansprüche 3 bis 6, **dadurch gekennzeichnet, dass** die erste Richtung einen rechten Winkel in Bezug auf die zweite Richtung bildet.

8. Anzeigegerät gemäß einem der Ansprüche 2 bis 7, **dadurch gekennzeichnet, dass** eine der ersten und zweiten leitenden Schicht (153, 157) mit einer Steuerelektrode verbunden ist, an die ein Kontrollsignal angelegt ist, und die andere leitende Schicht (153, 157) mit einer gemeinsamen Elektrode (156) verbunden ist.

9. Anzeigegerät gemäß einem der 2 bis 8, **dadurch gekennzeichnet, dass** es des Weiteren erste und zweite Elektroden (152, 156) umfasst, die mit der ersten und zweiten leitenden Schicht (153, 157) verbunden sind,
wobei die erste und zweite Elektrode (152, 156) einen Pfad entlang mindestens einer Kante des Abschirmfilms (150) bilden; und/oder
wobei die farbverändernde Schicht (155) von dem transparenten Zustand zu dem undurchsichtigen Zustand in Erwiderung auf ein Steuersignal, das an die erste und/oder zweite leitende Schicht (153, 157) angelegt wird, wechselt.

10. Anzeigegerät gemäß einem der Ansprüche 2 bis 9, **dadurch gekennzeichnet, dass** die farbverändernde Schicht (155) umfasst:
eine Vielzahl von Flüssigkristallelementen; und
eine Vielzahl von Abstandshaltern (SP2, SP3), die getrennt voneinander innerhalb der farbverändernden Schicht (155) angeordnet sind und die farbverändernde Schicht (155) in einer Richtung der Schichtdicke unterstützen.

11. Anzeigegerät gemäß einem der Ansprüche 1 bis 10, **dadurch gekennzeichnet, dass** es des Weiteren umfasst:
eine Steuerung, die dazu eingerichtet ist, ein Steuersignal anzulegen, sodass der Abschirmfilm (150) in dem ersten Zustand oder dem zweiten Zustand ist, wobei in dem ersten Zustand mindestens ein Teil des Abschirmfilms (150) transparent ist, und in dem zweiten Zustand mindestens ein Teil des Abschirmfilms (150) undurchsichtig ist.

12. Anzeigegerät gemäß einem der Ansprüche 1 bis 11, **dadurch gekennzeichnet, dass** ein undurchsichtiger Bereich in dem mindestens einen Teil des Abschirmfilms (150) enthalten ist.

13. Anzeigegerät gemäß Anspruch 11, **dadurch gekennzeichnet, dass** die Steuerung dazu eingerichtet ist, das Steuersignal anzuwenden, das einen oberen und unteren Bereich des Abschirmfilms (150) veranlasst, undurchsichtig zu sein, oder eine linke und rechte Seite des Abschirmfilms (150) veranlasst, undurchsichtig zu sein, basierend auf dem Bildformat eines Inhalts, der auf dem Anzeigegerät angezeigt wird.

## Revendications

1. Dispositif d'affichage comprenant :
un panneau (100) d'affichage, au moins une partie du panneau (100) d'affichage étant transparente et constituée d'une matière transparente ;
un film de protection (150) positionné au niveau d'un côté arrière du panneau (100) d'affichage, dans lequel le film de protection (150) est utilisable dans un premier état et un deuxième état, dans lequel, dans le premier état, au moins une partie du film de protection (150) est transparente et, dans le deuxième état, l'au moins une partie du film de protection (150) est opaque ; et
un capot arrière (200) positionné au niveau d'un côté arrière du film de protection (150), au moins une partie du capot arrière étant constituée d'une matière transparente,
dans lequel
le film de protection (150) inclut :
un premier film (151) positionné au niveau du côté arrière du panneau (100) d'affichage ;
un deuxième film (159) positionné au niveau d'un côté arrière du premier film (151) ;
une couche de décoloration (155) utilisable dans ledit premier état ou dans ledit deuxième état et positionnée entre le premier film (151) et le deuxième film (159) ;
une première couche conductrice (153) positionnée entre le premier film (151) et la couche de décoloration (155), la première couche conductrice (153) étant divisée en une pluralité de parties séparées les unes des autres ; et
une deuxième couche conductrice (157) positionnée entre la couche de décoloration (155) et le deuxième film (159), la deuxième couche conductrice (157) étant divisée en une pluralité de parties séparées les unes des autres,
**caractérisé en ce que** le premier film (151) et le deuxième film (159) sont souples et **en ce que** la première couche conductrice (153) est obtenue par un processus d'enduction sur le premier film (151) et la deuxième couche conductrice (157) est obtenue par un processus d'enduction sur le deuxième film (159).

2. Dispositif d'affichage selon la revendication 1, **caractérisé en ce que** le premier film (151) et le deuxième film (159) sont souples de manière à pouvoir être enroulés sur un rouleau.

3. Dispositif d'affichage selon la revendication 2,
**caractérisé en ce que** la pluralité de parties de la première couche conductrice (153) sont allongées dans un premier sens, et la pluralité de parties de la deuxième couche conductrice (157) sont allongées dans un deuxième sens différent du premier sens.

4. Dispositif d'affichage selon la revendication 3,
**caractérisé en ce que** la pluralité de parties de la première couche conductrice (153) sont positionnées le long du deuxième sens, et la pluralité de parties de la deuxième couche conductrice (157) sont positionnées le long du premier sens.

5. Dispositif d'affichage selon l'une quelconque des revendications 2 à 4,
**caractérisé en ce que** la première couche conductrice (153) inclut au moins une première partie de séparation (SA1) allongée dans le premier sens, et la deuxième couche conductrice (157) inclut au moins une deuxième partie de séparation (SA2) allongée dans le deuxième sens.

6. Dispositif d'affichage selon la revendication 5,
**caractérisé en ce que** la pluralité de parties de la première couche conductrice (153) et l'au moins une première partie de séparation (SA1) sont positionnées de façon alternée le long du deuxième sens, et la pluralité de parties de la deuxième couche conductrice (157) et l'au moins une deuxième partie de séparation (SA2) sont positionnées de façon alternée le long du premier sens.

7. Dispositif d'affichage selon l'une quelconque des revendications 3 à 6,
**caractérisé en ce que** le premier sens forme un angle droit par rapport au deuxième sens.

8. Dispositif d'affichage selon l'une quelconque des revendications 2 à 7,
**caractérisé en ce qu'**une des première et deuxième couches conductrices (153, 157) est connectée à une électrode de pilotage (152) à laquelle un signal de commande est appliqué, et l'autre couche conductrice (153, 157) est connectée à une électrode commune (156).

9. Dispositif d'affichage selon l'une quelconque des revendications 2 à 8,
**caractérisé en ce que** comprenant en outre des première et deuxième électrodes (152, 156) connectées aux première et deuxième couches conductrices (153, 157),
dans lequel les première et deuxième électrodes (152, 156) forment un chemin le long d'au moins un bord du film de protection (150) ; et/ou
dans lequel la couche de décoloration (155) passe dudit état transparent audit état opaque en réponse à un signal de commande appliqué à au moins une des première et deuxième couches conductrices (153, 157).

10. Dispositif d'affichage selon l'une quelconque des revendications 2 à 9, **caractérisé en ce que** la couche de décoloration (155) inclut :
une pluralité d'éléments de cristaux liquides ; et
une pluralité d'espaceurs (SP2, SP3) disposés séparément l'un de l'autre à l'intérieur de la couche de décoloration (155) et supportant la couche de décoloration (155) dans un sens de l'épaisseur.

11. Dispositif d'affichage selon l'une quelconque des revendications 1 à 10,
**caractérisé en ce que** comprenant en outre un contrôleur configuré pour appliquer un signal de commande, de telle sorte que le film de protection (150) est dans un état dudit premier état et dudit deuxième état, dans lequel, dans le premier état, au moins une partie du film de protection (150) est transparente et, dans le deuxième état, l'au moins une partie du film de protection (150) est opaque.

12. Dispositif d'affichage selon l'une quelconque des revendications 1 à 11,
**caractérisé en ce qu'**une zone opaque est incluse dans l'au moins une partie du film de protection (150).

13. Dispositif d'affichage selon la revendication 11,
**caractérisé en ce que** le contrôleur est configuré pour appliquer le signal de commande qui fait en sorte qu'une partie supérieure et une partie inférieure du film de protection (150) soit opaque ou fait en sorte qu'un côté gauche et un côté droit du film de protection (150) soit opaque sur la base du rapport de format d'un contenu à afficher sur le dispositif d'affichage.
